## Europäisches Patentamt
## European Patent Office
## Office européen des brevets

(11) Veröffentlichungsnummer: **0 157 162**
**B1**

(12) # EUROPÄISCHE PATENTSCHRIFT

(45) Veröffentlichungstag der Patentschrift:
03.02.88

(51) Int. Cl.⁴: **C 03 B 15/02**

(21) Anmeldenummer: **85102082.6**

(22) Anmeldetag: **26.02.85**

(54) **Verfahren und Vorrichtung zum Ziehen von Glasbändern.**

(30) Priorität: 02.03.84 DE 3407697

(43) Veröffentlichungstag der Anmeldung:
09.10.85 Patentblatt 85/41

(45) Bekanntmachung des Hinweises auf die Patenterteilung:
03.02.88 Patentblatt 88/5

(84) Benannte Vertragsstaaten:
BE FR GB IT NL

(56) Entgegenhaltungen:
BE-A-679 262
FR-A-2 195 364
US-A-1 615 841
US-A-1 741 886
US-A-3 231 351
US-A-3 801 411

(73) Patentinhaber: **Schott Glaswerke,
Hattenbergstrasse 10, D-6500 Mainz (DE)**
(84) Benannte Vertragsstaaten: **BE FR GB IT NL**

(73) Patentinhaber: **Carl- Zeiss- Stiftung trading as
SCHOTT GLASWERKE, Hattenbergstrasse 10,
D-6500 Mainz 1 (DE)**
(84) Benannte Vertragsstaaten: **GB**

(72) Erfinder: **Günthner, Franz, Tucholskyweg 46, D-6500
Mainz- Lerchenberg (DE)**

(74) Vertreter: **Schmitz, Waldemar, Dipl.- Ing., Büro Dr.
J. Rasper Bierstadter Höhe 22, D-6200 Wiesbaden
(DE)**

EP 0 157 162 B1

## Beschreibung

Die Erfindung betrifft ein Verfahren zum Ziehen von Glasbändern, bei welchem eine Schmelze von der Wanne eines Glasschmelzofens durch einen Zulaufkanal einer Ziehkammer zugeführt wird, aus der ein Glasband im wesentlichen in der ganzen Breite der Ziehkammer senkrecht nach oben abgezogen wird und das Ziehen unter Ausbildung eines freien Oberflächenspiegels in der Ziehkammer erfolgt, wobei die Schmelze in der Ziehkammer aufgeheizt wird.

Aus der US-PS 16 15 841 ist ein solches Verfahren zum Ziehen von Glasbändern bekannt, bei dem die Schmelze vom Schmelzofen durch einen Zulaufkanal kleinen Querschnitts einer Ziehkammer zugeführt wird, aus der ein Glasband senkrecht nach oben abgezogen wird. Die Beheizung der Ziehkamer erfolgt mit zwei Elektroden in der Form von Metallplatten, die auf beiden den Rändern des Glasbandes gegenüberliegenden Seiten angeordnet sind. Diese Elektroden erstrecken sich vom Boden der Ziehkammerwanne über die gesamte Seitenwand und werden über den Rand der Ziehkammerwanne herausgeführt. Der Nachteil dieser Beheizung besteht darin, daß der Spiegel und die übrige Schmelze nicht unterschiedlich beheizbar sind, was gerade bei leicht kristallisierenden Gläsern notwendig ist. Dadurch, daß die Elektroden auf den Stirnseiten angeordnet sind, ist eine Beheizung im Bereich der Zwiebel längs der Bandbreite nicht möglich. Da nur ein Heizkreis zur Verfügung steht, ist auch eine abschnittsweise Beheizung nicht möglich.

Die Ziehwanne ist durch zwei Bauteile abgedeckt, die auf den beiden der vertikalen Ziehebene benachbarten Seiten fest angeordnet sind.

Die Zuführung der Schmelze erfolgt durch einen nicht beheizten, geschlossenen Zulaufkanal, der unterhalb des Spiegels der Schmelze in der Ziehkammer in diese einmündet.

Ein weiteres Verfahren ist aus der GB-PS 673 981 bekannt, bei dem in der Ziehkammer an der Glasoberfläche zwischen Zwiebel und Ziehkammerwand beidseitig eine heiße Zone erzeugt wird. Hierzu wird ein Rahmen verwendet, der in die Schmelze eintaucht, sich auf beiden Seiten parallel der vertikalen Ziehebene erstreckt und sich über den Spiegel wölbende Flächen aufweist, die die Wärmeabstrahlung verhindern sollen.

Zur Einstellung dieser heißen Zonen sind auf beiden Seiten der Zwiebel durchgehende Gas- oder elektrische Heizungen, die in einzelnen Abschnitten nicht verschieden stark beaufschlagt werden können, vorgesehen. Durch diese beiden heißen Zonen soll die Kontinuität des kalten Films auf der Glasoberfläche zwischen Zwiebel und Ziehkammerwand unterbrochen werden. Ein direktes Aufheizen der Ziehkammerwand erfolgt nicht. Die Ziehwanne kann mit abschnittweise verstellbaren Schiebern abgedeckt werden.

Mit diesem Verfahren ist es nicht möglich, die Ziehkammerwand in der Höhe des Glasspiegels und darunter so aufzuheizen, daß einerseites jede Kristallisation sicher verhindert wird und andererseits das Glas nicht zu hoch aufgeheizt wird.

Aus der US-PS 1 741 886 ist es bekannt auch den Zulaufkanal zu beheizen. Ziehkammer und Zulaufkanal sind indirekt, d.h. auf der Außenseite der glasführenden, feuerfesten Steine mit heißen Gasen beheizt.

Mit keinem der bekannten Verfahren können brauchbare Glasbänder, besonders solche aus Borosilikatglas oder Glaskeramik hergestellt werden, da die Kristallisation an den der vertikalen Ziehebene einander gegenüberliegenden Wänden der Ziehkammer nicht verhindert werden kann.

Beim Verarbeiten von Glaskeramiken beispielsweise, darf die Temperatur an der Stelle, an der sich die Schmelze von der Ziehkammerwand löst, nicht unter einen bestimmten Wert von z. B. 1380° C abfallen, weil sonst die Schmelze kristallisiert. Andererseits muß die Schmelze auf dem Weg zur Tafelwurzel auf die für das Ziehen erforderliche Temperatur abgekühlt werden, die um mehr als 400° C niedriger als die vorgenannte Temperatur sein kann.

Daher ist es schwierig, die Forderungen nach einer ausreichend hohen Temperatur an der Ablösestelle von der Ziehkammerwand, nach einer gleichmäßigen und zügigen Strömung der Schmelze von der Ablösestelle zur Tafelwurzel und nach einer ausreichenden Abkühlung auf diesem Wege bis auf eine geeignete Ziehtemperatur miteinander in Einklang zu bringen.

Dementsprechend ist das Ziel der Erfindung ein Verfahren, durch welches auch zur Verdampfung und Kristallisation neigende Gläser und Glaskeramiken zu qualitativ hochwertigen Bändern bzw. Tafeln ohne Streifenbildung verarbeitet werden können. Ein weiteres Ziel der Erfindung ist eine zur Durchführung dieses Verfahrens geeignete Ziehvorrichtung.

Der Erfindung liegt die Erkenntnis zugrunde, daß diese Aufgabe sich lösen läßt, wenn es gelingt, die Temperatur der Schmelze an den freien Oberflächen, an denen die Schmelze mit Luft in Berührung tritt, zu kontrollieren und zu steuern.

Insbesondere liegt der Erfindung die Aufgabe zugrunde, die Temperatur der Schmelze in ihrer freien Oberfläche beim Abkühlen auf die Ziehtemperatur so zu steuern, daß eine Kristallisation im Bereich der Ablösestelle der Schmelze von der Ziehkammerwand oder auf dem Weg von der Ablösestelle zur Ziehwurzel vermieden wird.

Diese Aufgabe wird erfindungsgemäß dadurch gelöst, daß diese Glasbänder aus leicht kristallisierendem oder zur Verdampfung neigendem Glas oder aus Glaskeramik gezogen werden, daß die Schmelze in der Ziehkammer an den der Ziehebene gegenüberliegenden Ziehkammerwänden im Bereich ihres Spiegels durch teilweise in die Schmelze eintauchende strombeaufschlagte Edelmetallbänder indirekt aufgeheizt wird, daß diese Aufheizung abschnittsweise längs der Ziehkammerwand erfolgt und daß in einem solchen Abstand zur Ablösestelle der Schmelze von der Ziehkammerwand ein Kühlluftstrom über den Spiegel der Schmelze geleitet wird, daß es zu keiner zu starken Kühlwirkung im Berech der Ablösestelle von der Ziehkammerwand kommt.

Die Ablösestelle kann zusätzlich, beispielsweise durch einen Heizstrahler, beheizt werden.

Bei dieser Verfahrensweise stellt sich in der Ziehkammer ein dynamischer Glasspiegel ein, der beträchtlich unter dem statischen Glasspiegel liegen kann, beispielsweise bis zu 200 mm. Dabei bildet dieser Glasspiegel im Ziehtank die einzige freie Oberfläche der noch nicht zum Glasband geformten Schmelze. Die Stellen, an denen sich die Schmelze von der Wand der Ziehkammer löst, sind beheizbar, damit sich dort, auch bei längerer Verweilzeit, keine Kristalle bzw. Entglasungen bilden. Die Schmelze wird an allen Kontaktflächen auf so hoher Temperatur gehalten, daß sie dort nicht entglasen kann.

Das Leiten eines Kühlluftstroms über den Spiegel der Schmelze steuert die Temperatur der zur Tafelwurzel strömenden Schmelze, ohne daß es zu einer zu starken Kühlwirkung im Bereich der Ablösestelle von der Ziehkammerwand kommen muß. Damit ist das Verfahren insbesondere zum Ziehen von Glaskeramik geeignet. Um eine übermäßige Kühlwirkung durch Abstrahlung und durch den Kühlluftstrom auf die Ablösestelle im Bereich der Ziehkammerwand auszuschließen, ist es vorteilhaft, die Ablösestelle der Schmelze zu beheizen, was zweckmäßigerweise von oben mittels eines auf die Ablösestelle gerichteten Heizstrahlers geschieht.

Die Erfindung betrifft auch eine Vorrichtung zur Durchführung des erfindungsgemäßen Verfahrens, die eine Ziehkammer, einen die Ziehkammer mit der Wanne eines Glasschmelzofens verbindenden Zulaufkanal und eine über der Ziehkammer angeordnete Zieheinrichtung aufweist, wobei der Zulaufkanal auf seiner ganzen Länge geschlossen und unterhalb des Spiegels der Schmelze in der Ziehkammer angeordnet ist und einen gegenüber der Ziehkammerbreite eingeengten Querschnitt hat und die Ziehkammer mit einer Heizeinrichtung versehen ist.

Die Vorrichtung ist erfindungsgemäß so ausgebildet, daß sie eine aus mindestens zwei Edelmetallbändern bestehende Heizeinrichtung aufweist, die sich im Bereich des Spiegels der Schmelze an den der Ziehebene gegenüberliegenden Ziehkammerwänden im wesentlichen über die Breite der Ziehkammer erstreckt wobei diese Edelmetallbänder an mindestens zwei Heizkreise angeschlossen sind, so daß die gesamte Breite der Ziehkammer im Bereich des Spiegel beiderseits in mindestens zwei Abschnitten unterschiedlich indirekt beheizbar ist und daß Mittel zur Leitung eines Kühlluftstromes über den Spiegel der Schmelze vorgesehen sind.

Zweckmäßige Ausführungen und Weiterbildungen der Erfindung ergeben sich aus den Unteransprüchen.

Die erfindungsgemäße Vorrichtung wird nachfolgend anhand schematischer Zeichnungen näher erläutert. Es zeigen:

Figur 1 einen Vertikalschnitt durch die erfindungsgemäße Vorrichtung,

Figur 2 eine Vorrichtung in Draufsicht,

Figur 3 einen vertikalen Teilschnitt durch das Rühraggregat im Zulaufkanal und

Figur 4 einen Vertikalschnitt durch die erfindungsgemäße Vorrichtung mit Kühleinrichtungen.

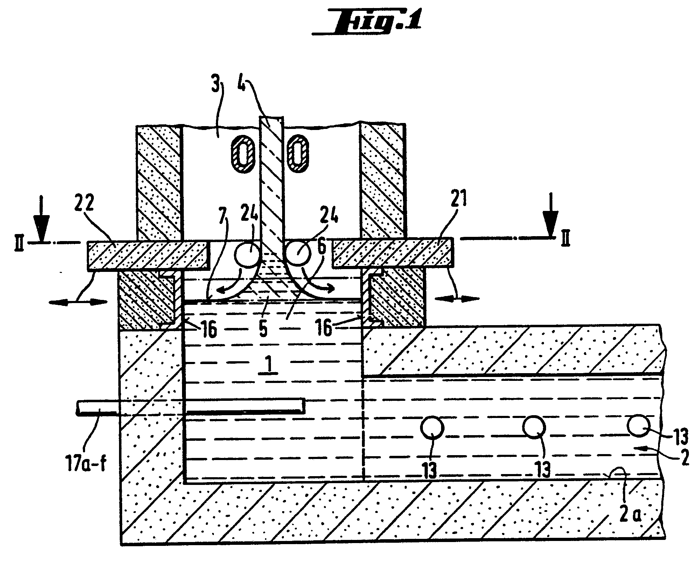

Gemäß Figuren 1 und 2 ist eine Ziehkammer 1 vorgesehen, die über einen Zulaufkanal 2 mit der nicht dargestellten Wanne eines Glasschmelzofens verbunden ist. Oberhalb der Ziehkammer 1 ist eine nicht dargestellte Ziehvorrichtung bekannter Bauart in einem Ziehschacht 3 angeordnet. Durch den Ziehschacht 3 wird ein Glasband 4 senkrecht nach oben aus der in der Ziehkammer 1 befindlichen Schmelze 6 gezogen, wobei sich eine Wurzel 5 am unteren Ende des Glasbandes 4 ausbildet.

Die über der Schmelze 6 und der Wurzel 5 in der Figur 1 verlaufenden, gebogenen Pfeile deuten einen von - hier nicht eingezeichneten - Mitteln zur Leitung eines Kühlluftstromes über den Spiegel 7 der Schmelze 6 erzeugten Kühlluftstrom an.

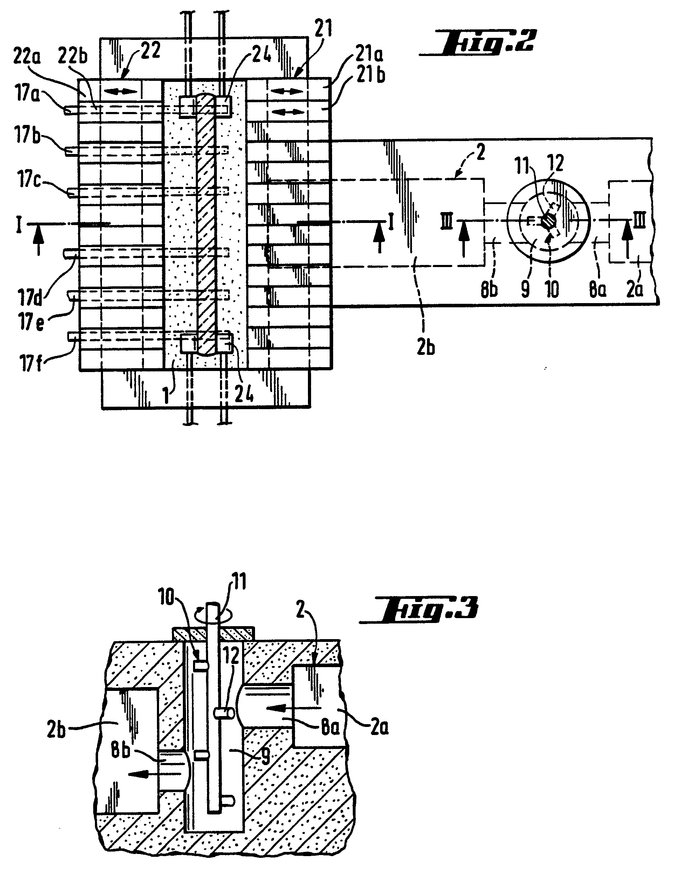

Wie aus Fig. 2 und 3 zu ersehen ist, ist der Zulaufkanal 2 in einen wannenseitigen Abschnitt 2a und in einen ziehkammerseitigen Abschnitt 2b unterteilt, die über höhenversetzte Anschlußkanäle 8a und 8b sowie eine senkrecht angeordnete Rührkammer 9 von kreisförmigem Querschnitt miteinander verbunden sind. Die Rührkammer 9 nimmt einen Rührer 10 auf, der aus einer Welle 11 mit Rührflügeln 12 besteht. Die Welle 11 ist nach oben aus der Rührkammer 9 herausgeführt und ist mit einem nicht dargestellten Antrieb verbunden.

Wie aus Fig. 2 zu ersehen ist, weist der Zulaufkanal 2 eine wesentlich geringere Breite auf als die Ziehkammer 1, deren Breite im wesentlichen der Breite des herzustellenden Glasbandes 4 entspricht. Die Höhe des Zulaufkanals 2 bzw. seiner Abschnitte 2a und 2b entspricht etwa der Kanalbreite, so daß der Zulaufkanal einen im wesentlichen quadratischen Querschnitt aufweist. Im Interesse einer gleichmäßigen Durchströmung des Zulaufkanals 2 kann diesem auch ein gerundetes Querschnittsprofil gegeben werden.

Wie aus Figur 1 zu ersehen ist, ist der Zulaufkanal 2 mit seinem ganzen Querschnitt unterhalb des Spiegels 7 der Glasschmelze der Ziehkammer 1 angeordnet. Ferner ist der Zulaufkanal 2 mit einer Heizung in Form von Elektroden 13 versehen. Wie üblich ist der Zulaufkanal 2 ebenso wie die Ziehkammer 1 mit einem feuerfesten Material ausgekleidet.

Die Ziehkammer 1 ist mit einer Heizeinrichtung in Form von strombeaufschlagten Edelmetallbändern 16 versehen, die an mindestens zwei Heizkreise angeschlossen sind, so daß die gesamte Breite der Ziehkammer in mindestens zwei Abschnitten unterschiedlich beheizbar ist.

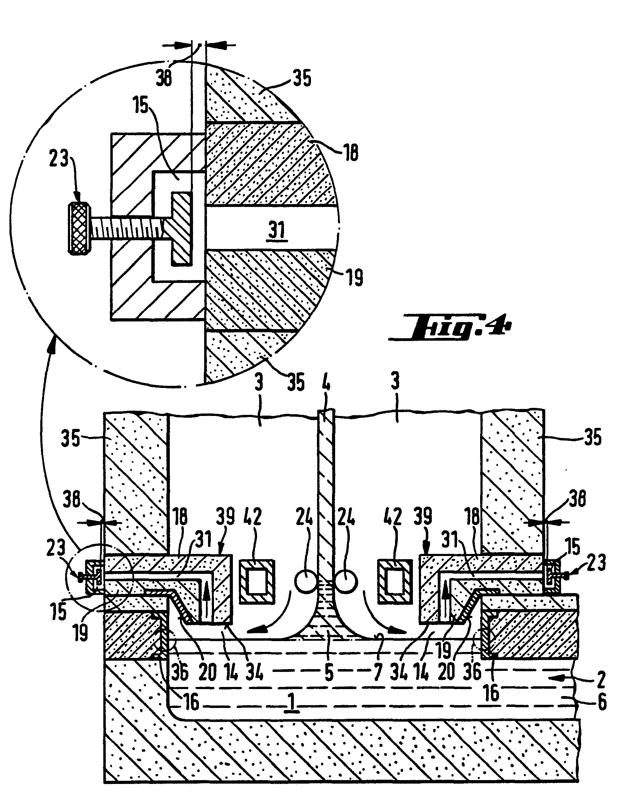

Zur Kühlung der zur Wurzel 5 strömenden Glasschichten sind - wie in Fig. 4 dargestellt ist - zwei Einbauteile 39 aus feuerfestem Material in die sich gegenüberliegenden Seiten der Ziehkammerwand 35 eingebaut, die in die Ziehkammer 1 hineinragen und Strömungskanäle 31 sowie einen Sammelkanal 15 aufweisen, wobei das nach unten ragende, innere Ende des Einbauteils 39 eine Luftleitwand 34 bildet, die eine Luftkammer über der Schmelze bildet, die an die durch die Ziehkammerwand 35 geführten Strömungskanäle 31 angeschlossen ist und mit dem Spalt 14 in Verbindung steht. Die Strömungskanäle 31 verlaufen durch die Einbauteile 39 und münden in den Sammelkanal 15 auf der Außenseite der Ziehkammerwand 35. An die beiden Sammelkanäle 15 ist in nicht dargestellter Weise der Saugstutzen eines Gebläses angeschlossen. Auf diese Weise wird ein Kühlluftstrom durch den Spalt 14 erzeugt. Dieser Kühlluftstrom trägt im wesentlichen Maße dazu bei, daß die von den Ablösestellen 36 zur Wurzel 5 strömende Schmelze abgekühlt wird.

Wie dargestellt ist, können die Einbauteile 39 jeweils von zwei getrennten Formstücken 18 und 19 gebildet sein, welche die Strömungskanäle 31 zwischen sich einschließen, die mit unterschiedlichen Luftmengen beaufschlagt werden. Dadurch werden Temperaturunterschiede im Bereich des Spiegels 7 ausgeglichen. Die Weite des Spalts 38 wird durch Ventile 23 eingestellt. Das untere Formstück 19 ist an seinem inneren Ende mit einer Schrägfläche versehen, an der ein auf die Ablösestelle gerichteter Heizstrahler 20 befestigt ist.

Zur Abkühlung der von den Ablösestellen 36 zur Wurzel 5 strömenden Schmelze tragen Kühler 42 bei, die im wesentlichen symmetrisch auf gegenüberliegenden Seiten der Ziehebene angeordnet sind.

Ferner ist die Ziehkammer 1 mit Abdeckschiebern 21 und 22 auf gegenüberliegenden Seiten der Ziehebene versehen. Die Abdeckschieber 21 und 22 sind an den oberen Enden der sich in Breitenrichtung erstreckenden Kammerwände geführt und können mehr oder weniger weit in Richtung auf die Ziehebene eingeschoben werden. Auch die Abdeckschieber 21 und 22 sind in Einzelschieber 21a, 21b usw. bzw. 22a, 22b usw. unterteilt (Fig. 2).

In den Figuren 1, 2 und 4 sind ferner noch zwei Paare bekannter Führungsrollen 24 eingezeichnet, die dazu dienen, ein Einschnüren des Glasbandes 4 in seiner Breite zu verhindern.

Es ist ersichtlich, daß bei der beschriebenen Vorrichtung die Glasschmelze eine freie Oberfläche nur im Bereich des Spiegels 7 aufweist, in dem sie zur Wurzel 5 strömt. An der Ablösestelle 36, die in Höhe des Spiegels 7 liegt, löst sich die Schmelze von der Ziehkammerwand. Diese Stelle ist mittels der Heizbänder 16 so beheizbar, daß sich dort keine Kristalle bzw. Entglasungen bilden können. Natürlich wird auch an allen vorangehenden Kontaktstellen mit dem feuerfesten Wandmaterial der Ziehkammer 1 und des Zulaufkanals 2 die Temperatur so hoch gehalten, daß Kristallbildungen vermieden werden. Das geschieht durch die Elektroden 17a bis f, wobei je nach der Ziehkammerbreite drei bis neun Elektroden mit ebensovielen Heizkreisen angeordnet sein können. Nach dem Lösen der Schmelze von der Ablösestelle 36 strömt die Schmelze unter ständiger Bewegung und mit geringer Verweilzeit zur Wurzel 5. Die Abkühlung der Schmelze auf dem Weg von der Ablösestelle 36 zur Wurzel 5 wird durch entsprechende Einstellung der Abdeckschieber 21 und 22 bzw. des durch die Strömungskanäle 31 austretenden Luftstroms so gesteuert, daß hier ebenfalls eine Kristallbildung infolge zu starker Abkühlung verhindert wird. Daher läßt sich ein streifenfreies Glasband von hoher Qualität herstellen, und zwar insbesondere auch aus Gläsern, die wie Borosilikatglas oder Glaskeramik zur Verdampfung neigen, weil die Schmelze auf ihrem Wege von der Wanne zum Glasband nur kurzzeitig und unter genau einstellbaren Bedingungen einen freien Oberflächenbereich durchläuft.

**Patentansprüche**

1. Verfahren zum Ziehen von Glasbändern, bei welchem eine Schmelze von der Wanne eines Glasschmelzofens durch einen Zulaufkanal einer Ziehkammer zugeführt wird, aus der ein Glasband im wesentlichen in der ganzen Breite der Ziehkammer senkrecht nach oben abgezogen wird und das Ziehen unter Ausbildung eines freien Oberflächenspiegels in der Ziehkammer erfolgt, wobei die Schmelze in der Ziehkammer aufgeheizt wird,
dadurch gekennzeichnet, daß diese Glasbänder aus leicht kristallisierendem oder zur Verdampfung neigendem Glas oder aus Glaskeramik gezogen werden,
daß die Schmelze in der Ziehkammer an den der Ziehebene gegeüberliegenden Ziehkammerwänden im Bereich ihres Spiegels durch teilweise in die Schmelze eintauchende strombeaufschlagte Edelmetallbänder indirekt aufgeheizt wird,
daß diese Aufheizung abschnittsweise längs der Ziehkammerwand erfolgt und
daß in einem solchen Abstand zur Ablösestelle der Schmelze von der Ziehkammerwand ein Kühlluftstrom über den Spiegel der Schmelze geleitet wird, daß es zu keiner zu starken Kühlwirkung im Bereich der Ablösestelle von der Ziehkammerwand kommt.

2. Verfahren nach Anspruch 1, dadurch gekennzeichnet, daß die Schmelze in der Ziehkammer unterhalb des Spiegels zusätzlich mittels Elektroden direkt beheizt wird.

3. Verfahren nach einem der Ansprüche 1 und 2, dadurch gekennzeichnet, daß die Schmelze auch im Zulaufkanal mittels Elektroden direkt beheizt wird.

4. Verfahren nach einem der Ansprüche 1 bis 3, dadurch gekennzeichnet, daß die Ziehkammer mittels Schieber abschnittweise abgedeckt wird.

5. Verfahren nach einem der Ansprüche 1 bis 4, dadurch gekennzeichnet, daß das gezogene Glasband an seinen Randzonen mittels Rollen geführt wird.

6. Verfahren nach einem der Ansprüche 1 bis 5, dadurch gekennzeichnet, daß die Schmelze im Zulaufkanal gerührt wird.

7. Verfahren nach einem der Ansprüche 1 bis 6, dadurch gekennzeichnet, daß im Abstand zur Ablösestelle der Schmelze von der Ziehkammerwand ein Kühlluftstrom über den Spiegel der in der Ziehkammer befindlichen Schmelze geleitet wird.

8. Verfahren nach Anspruch 1, dadurch gekennzeichnet, daß die Ablösestelle mittels eines auf sie gerichteten Heizstrahlers von oben beheizt wird.

9. Vorrichtung zur Durchführung des Verfahrens gemäß den Ansprüchen 1 bis 8, mit einer Ziehkammer, einem die Ziehkammer mit der Wanne eines Glasschmelzofens verbindenden Zulaufkanal und einer über der Ziehkammer angeordneten Zieheinrichtung, wobei der Zulaufkanal ausf seiner ganzen Länge geschlossen ist und sein Niveau unterhalb des Spiegels der Schmelze in der Ziehkammer sich befindet, der Zulaufkanal einen gegenüber der Ziehkammerbreite eingeengten Strömungsquerschnitt aufweist und die Ziehkammer mit einer Heizeinrichtung versehen ist, dadurch gekennzeichnet, daß die Heizeinrichtung (16) der Ziehkammer (1) auf jeder Seite der Ziehebene aus mindestens zwei Edelmetallbändern besteht, die sich im Bereich des Spiegels (7) der Schmelze an der Ziehkammerwand auf an den der Ziehebene einander gegenüberliegenden Ziehkammerwänden im wesentlichen über die gesamte Breite der Ziehkammer (1) erstrecken, und die jeweils an mindestens zwei Heizkreise angeschlossen sind, so daß die gesamte Breite der Ziehkammer im Bereich des Spiegels (7) beiderseits in mindestens zwei Abschnitten · unterschiedlich indirekt beheizbar ist und daß Mittel zur Leitung eines Kühlluftstromes über den Spiegel (7) der Schmelze (6) vorgesehen sind.

10. Vorrichtung nach Anspruch 9, dadurch gekennzeichnet, daß in der Ziehkammer (1) unterhalb des Spiegels (7) auf der der Zulaufkammer (2) gegenüberliegenden Seite Elektroden (17) angeordnet sind, die gegebenenfalls an mehrere Heizkreise angeschlossen sind.

11. Vorrichtung nach einem der Ansprüche 9 oder 10, dadurch gekennzeichnet, daß die Heizeinrichtung (13) im Zulaufkanal (2) aus Elektroden besteht.

12. Vorrichtung nach einem der Ansprüche 9 bis 11, dadurch gekennzeichnet, daß die Ziehkammer (1) auf beiden der vertikalen Ziehebene gegenüberliegenden Seiten Abdeckschieber (21, 22) aufweist, die in Richtung auf die Ziehebene verstellbar sind.

13. Vorrichtung nach Anspruch 12, dadurch gekennzeichnet, daß diese Abdeckschieber (21, 22) aus einzeln verstellbaren Schieberabschnitten (21a, 21b,..., 22a, 22b,...) zusammengesetzt sind.

14. Vorrichtung nach einem der Ansprüche 9 bis 13, dadurch gekennzeichnet, daß die Ziehkammer (1) auf beiden den Rändern des Glasbandes gegenüberliegenden Seiten oberhalb des Spiegels (7) mindestens je zwei paarweise angeordnete Rollen (24) aufweist, zwischen denen die Randzonen des gezogenen Glasbandes (4) geführt werden.

15. Vorrichtung nach einem der Ansprüche 9 bis 14, dadurch gekennzeichnet, daß in den Zulaufkanal (2) ein Rührer (10) eingebaut ist.

16. Vorrichtung nach einem der Ansprüche 9 bis 15, dadurch gekennzeichnet, daß zwischen der Ablösestelle (36) der Schmelze (6) von der Ziehkammerwand (35) und der senkrechten Ziehebene im Spaltabstand über dem Spiegel (7) der Schmelze (6) als Mittel zur Leitung eines Kühlluftstromes über den Spiegel (7) der Schmelze (6) eine Luftleitwand (34) angeordnet ist, und daß ein Gebläse zum Durchblasen des Spalts (14) zwischen dem Spiegel (7) der Schmelze (6) und der Luftleitwand (34) mit Kühlluft vorgesehen ist.

17. Vorrichtung nach Anspruch 16, dadurch gekennzeichnet, daß die Luftleitwand (34) vom nach unten vorragenden inneren Ende eines in der Ziehkammerwand (35) gelagerten Einbauteils (39) gebildet ist, das eine Luftkammer über der Schmelze bildet, die einerseits mit dem Spalt (14) in Verbindung steht und an die andererseits durch die Ziehkammerwand (35) geführte Strömungskanäle (31) angeschlossen sind.

18. Vorrichtung nach Anspruch 17, dadurch gekennzeichnet, daß die Strömungskanäle (31) in einen Sammelkanal (15) auf der Außenseite der Ziehkammerwand (35) münden, an den das Gebläse mit seinem Saugstutzen angeschlossen ist.

19. Vorrichtung nach Anspruch 18, dadurch gekennzeichnet, daß die Strömungskanäle (31) durch das Einbauteil (39) verlaufen.

20. Vorrichtung nach einem der Ansprüche 16 bis 19, dadurch gekennzeichnet, daß am Einbauteil (39) ein auf die Ablösestelle (36) der Schmelze (6) gerichteter Heizstrahler (20) angeordnet ist.

## Claims

1. Method for drawing glass ribbons, wherein a melt is supplied from the tank of a glass melting furnace through a supply channel to a drawing chamber from which a glass ribbon is drawn vertically upwards substantially across the whole width of the drawing chamber, the drawing being performed in the drawing chamber while forming a free melt surface, and the melt is heated-up in the drawing chamber, characterized in that the glass ribbons are drawn from glass or glass ceramic which crystallizes easily or tends to vaporization, and that the melt is indirectly heated in the area of its surface in the drawing chamber at the drawing chamber walls disposed oppositely of the drawing plane, by noble metal ribbons which partly submerge into the melt and are subjected to a current,

that the heating-up is performed section-wise along the drawing chamber wall, and that a stream of cooling air is conducted over the surface of the melt at a distance from the point of disengagement of the melt from the drawing chamber wall so that an excessive cooling effect is avoided in the area of the point of disengagement from the drawing chamber wall.

2. Method according to claim 1, characterized in that the melt in the drawing chamber is additionally directly heated below the melt surface by means of electrodes.

3. Method according to one of the claims 1 and 2, characterized in that the melt is directly heated also in the supply channel by means of electrodes.

4. Method according to one of the claims 1 to 3, characterized in that the drawing chamber is section-wise covered by means of slides.

5. Method according to one of the claims 1 to 4, characterized that the drawn glass ribbon is guided at its marginal zones by means of rollers.

6. Method according to one of the claims 1 to 5, characterized in that the melt in the supply channel is agitated.

7. Method according to one of the claims 1 to 6, characterized in that a stream of cooling air is conducted over the surface of the melt being in the drawing chamber, at a distance from the point of disengagement of the melt from the drawing chamber wall.

8. Method according to claim 1, characterized in that the point of disengagement is heated from above by means of a radiant heater directed thereto.

9. Apparatus for performing the method according to claims 1 to 8, comprising a drawing chamber, a supply channel interconnecting the drawing chamber with a tank of a glass melting furnace, and a drawing device arranged above the drawing chamber, the supply channel being closed over its whole length, the level of the supply channel being disposed below the surface of the melt in the drawing chamber, the supply channel having a flow cross section restricted as compared to the drawing chamber width, and the drawing chamber being provided with a heating device, characterized in that the heating device (16) of the drawing chamber (1) consists, on each side of the drawing plane, of at least two noble metal ribbons, which extend in the area of the surface (7) of the melt essentially across the whole width of the drawing chamber (1) on the drawing chamber walls being oppositely disposed of the drawing plane, the noble metal ribbons being each connected to at least two heating circuits whereby the whole width of the drawing chamber in the area of the surface (7) can be differently indirectly heated in at least two sections, and in that means are provided to conduct a stream of cooling air over the surface (7) of the melt (6).

10. Apparatus according to claim 9, characterized in that electrodes (17) are arranged in the drawing chamber (1) below the surface (7) on the side which is opposite to the supply chamber (2), the electrodes being optionally connected to a plurality of heating circuits.

11. Apparatus to one of the claims 9 or 10, characterized in that the heating device (13) in the supply channel (2) consists of electrodes.

12. Apparatus according to one of the claims 9 to 11, characterized in that the drawing chamber (1) comprises covering slides (21, 22) on both sides opposite of the vertical drawing plane, the cover slides being adjustable in the direction towards the drawing plane.

13. Apparatus according to claim 12, characterized in that the cover slides (21, 22) are composed of individually adjustable slide sections (21a, 21b..., 22a, 22b...).

14. Apparatus according to one of the claims 9 to 13, characterized in that the drawing chamber (1) comprises at least two rollers (24) on each of the two sides which are disposed oppositely of the edges of the glass ribbon, the rollers being arranged pair-wise above the surface (7), the marginal zones of the drawn glass ribbon (4) being guided between the rollers.

15. Apparatus according to one of the claims 9 to 14, characterized in that a stirrer (10) is built-in in the supply channel (2).

16. Apparatus according to one of the claims 9 to 15, characterized in that, as a means for conducting a stream of cooling air over the surface (7) of the melt (6), an air conducting wall (34) is arranged between the point of disengagement (36) of the melt (6) from the drawing chamber wall (35) and the vertical drawing plane with a gap distance above the surface (7) of the melt (6), and in that a blower is provided for blowing cooling air through the gap (14) between the surface (7) of the melt (6) and the air conducting wall (34).

17. Apparatus according to claim 16, characterized in that the air conducting wall (34) is formed by the downwardly projecting interior end of a built-in part (39) supported in the drawing chamber wall (35), the built-in part forming above the melt an air chamber which on the one side is in communication with the gap (14) and on the other side is connected to flow-channels (31) extending through the drawing chamber wall (35).

18. Apparatus according to claim 17, characterized in that the flow channels (31) merge into a collecting channel (15) on the outer side of the drawing chamber wall (35), the blower being connected with its suction stub to the collecting channel.

19. Apparatus according to claim 18, characterized in that the flow channels (31) extend through the built-in part (39).

20. Apparatus according to one of the claims 16 to 19, characterized in that a radiant heater (20) is arranged at the built-in part (39), directed to the point of disengagement (36) of the melt (6).

**Revendications**

1. Procédé pour étirer des rubans de verre, selon lequel une masse fondue est amenée depuis la cuve d'un four de fusion de verre à travers un canal d'arrivée à une chambre d'étirage, d'où un ruban de verre est étiré verticalement vers le haut sur essentiellement toute la largeur de la chambre d'étirage et selon lequel l'étirage s'effectue avec formation d'une surface libre de la masse fondue dans la chambre d'étirage, chambre dans laquelle la masse fondue est chauffée, caractérisé en ce que les rubans de verre sont produits de verre ou de vitro-céramique se cristallisant facilement ou ayant tendance à s'évaporer, que la masse fondue est chauffée indirectement dans la chambre d'étirage, sur des parois de cette chambre faisant face au plan d'étirage, dans la région de la surface de la masse fondue, au moyen de bandes de métal noble parcourues par un courant électrique et immergées partiellement dans la masse, que ce chauffage s'effectue par segments le long de la paroi de la chambre d'étirage et que l'on fait passer un courant d'air de refroidissement sur la surface de la masse fondue, à une telle distance du point de décollement de la masse de la paroi de la chambre d'étirage, que l'effet de refroidissement dans la région de ce point de décollement ne devient pas trop intense.

2. Procédé selon la revendication 1, caractérisé en ce que la masse fondue est en outre chauffée directement dans la chambre d'étirage au moyen d'électrodes situées sous la surface de la masse.

3. Procédé selon la revendication 1 ou 2, caractérisé en ce que la masse fondue est également chauffée de façon directe par des électrodes dans le canal d'arrivée.

4. Procédé selon une des revendications 1 à 3, caractérisé en ce que la chambre d'étirage est recouverte par segments au moyen de volets coulissants.

5. Procédé selon une des revendications 1 à 4, caractérisé en ce que le ruban de verre étiré est guidé au moyen de rouleaux dans ses zones marginales.

6. Procédé selon une des revendications 1 à 5, caractérisé en ce que la masse fondue est brassée dans le canal d'arrivée.

7. Procédé selon une des revendications 1 à 6, caractérisé en ce que l'on fait passer un courant d'air de refroidissement sur la surface de la masse fondue se trouvant dans la chambre d'étirage, à une certaine distance du point de décollement de la masse de la paroi de cette chambre.

8. Procédé selon la revendication 1, caractérisé en ce que le point de décollement est chauffé d'en haut au moyen d'un dispositif de chauffage rayonnant dirigé sur ce point.

9. Dispositif pour la mise en oeuvre du procédé selon les revendications 1 à 8, comprenant une chambre d'étirage, un canal d'arrivée reliant la chambre d'étirage à la cuve d'un four de fusion de verre et une étireuse installée au-dessus de la chambre d'étirage, le canal d'arrivée étant fermé sur toute sa longueur, étant situé au-dessous de la surface de la masse fondue dans la chambre d'étirage et ayant une section d'écoulement rétrécie par rapport à la largeur de la chambre d'étirage, laquelle est équipée d'un dispositif de chauffage,
caractérisé en ce que
le dispositif de chauffage (16) de la chambre d'étirage (1) est constitué, sur chaque côté du plan d'étirage, d'au moins deux bandes de métal noble qui s'étendent essentiellement sur toute la largeur de la chambre d'étirage (1), dans la région de la surface (7) de la masse fondue, sur des parois opposées de la chambre faisant face au plan d'étirage, les bandes sur chaque côté de ce plan étant raccordées à au moins deux circuits électriques de chauffage, de manière que la région de la surface (7) de la masse puisse être chauffée indirectement et de façon différenciée en au moins deux sections sur toute la largeur de la chambre d'étirage, sur chacun des deux côtés, et que des moyens sont prévus pour faire passer un courant d'air de refroidissement sur la surface (7) de la masse fondue (6).

10. Dispositif selon la revendication 9, caractérisé en ce que des électrodes (17), connectées éventuellement à plusieurs circuits de chauffage, sont disposées au-dessous de la surface (7) de la masse fondue dans la chambre d'étirage (1), du côté opposé au canal d'arrivée (2).

11. Dispositif selon la revendication 9 ou 10, caractérisé en ce que le dispositif de chauffage (13) dans le canal d'arrivée (2) est constitué d'électrodes.

12. Dispositif selon une des revendications 9 à 11, caractérisé en ce que la chambre d'étirage (3) présente des volets coulissants de recouvrement (21, 22) sur les deux côtés faisant face au plan d'étirage vertical, volets qui sont déplaçables en direction de ce plan.

13. Dispositif selon la revendication 12, caractérisé en ce que les volets de recouvrement (21, 22) sont constitués de segments 21a, 21b,..., 22a, 22b,...) réglables individuellement.

14. Dispositif selon une des revendications 9 à 13, caractérisé en ce que la chambre d'étirage (3) présente, au-dessus de la surface (7) de la masse fondue, sur les deux côtés opposés des bords du ruban de verre, au moins deux rouleaux (24) disposés par paire pour chaque bord, entre lesquels sont guidées les zones marginales du ruban de verre (4) étiré.

15. Dispositif selon une des revendications 9 à 14, caractérisé en ce qu'un agitateur (10) est incorporé dans le canal d'arrivée (2).

16. Dispositif selon une des revendications 9 à 15, caractérisé en ce qu'une paroi (34) de guidage de l'air, servant de moyen pour faire passer un courant d'air de refroidissement sur la surface (7) de la masse fondue (6), est disposée à une distance formant une fente au-dessus de cette surface (7), entre le point de décollement (36) de la masse fondue (6) de la paroi (35) de la chambre d'étirage et le plan d'étirage vertical, et qu'un ventilateur est prévu pour faire passer un courant d'air de refroidissement à travers la fente (14) entre la surface (7) de la masse (6) et la paroi de guidage de l'air (34).

17. Dispositif selon la revendication 16, caractérisé en ce que la paroi de guidage de l'air (34) est formée par l'extrémité intérieure, faisant saillie vers le bas, d'un élément (39) incorporé dans la paroi (35) de la chambre d'étirage, l'élément formant une chambre à air au-dessus de la masse fondue, qui communique d'une part avec la fente (14) et à laquelle sont raccordés d'autre part des canaux d'écoulement d'air (31) traversant la paroi (35) de la chambre d'étirage.

18. Dispositif selon la revendication 17, caractérisé en ce que les canaux d'écoulement (31) débouchent dans un canal collecteur (15) sur le côté extérieur de la paroi (35) de la chambre d'étirage, sur lequel est raccordée la tubulure d'aspiration du ventilateur.

19. Dispositif selon la revendication 18, caractérisé en ce que les canaux d'écoulement (31) traversent l'élément incorporé (39).

20. Dispositif selon une des revendications 16 à 19, caractérisé en ce qu'un dispositif de chauffage rayonnant (20), dirigé sur le point de décollement (36) de la masse fondue (6), est disposé sur l'élément incorporé (39).

**Fig.1**

0 157 162

Fig.2

Fig.3

3

**Fig.4**